(19) Europäisches Patentamt

European Patent Office

Office européen des brevets

(11) Veröffentlichungsnummer : **0 193 720**
**B1**

(12) **EUROPÄISCHE PATENTSCHRIFT**

(45) Veröffentlichungstag der Patentschrift:
09.08.89

(21) Anmeldenummer : 86100661.7

(22) Anmeldetag : 20.01.86

(51) Int. Cl.⁴ : **C 08 L 77/12, C 08 K 3/04**

(54) **Kälteschlagzähe, thermoplastisch verarbeitbare Formmassen.**

(30) Priorität : 05.03.85 DE 3507657

(43) Veröffentlichungstag der Anmeldung :
10.09.86 Patentblatt 86/37

(45) Bekanntmachung des Hinweises auf die Patenterteilung : 09.08.89 Patentblatt 89/32

(84) Benannte Vertragsstaaten :
AT BE CH DE FR GB IT LI NL SE

(56) Entgegenhaltungen :
EP–A– 0 103 148
EP–A– 0 187 929
DE–A– 3 242 827
Die Akte enthält technische Angaben, die nach dem
Eingang der Anmeldung eingereicht wurden und die
nicht in dieser Patentschrift enthalten sind.

(73) Patentinhaber : HÜLS AKTIENGESELLSCHAFT
Patentabteilung / PB 15 - Postfach 13 20
D-4370 Marl 1 (DE)

(72) Erfinder : Dröscher, Michael, Dr.
Hetkerbruch 34
D-4270 Dorsten 11 (DE)
Erfinder : Horlbeck, Gernot, Dr.
c/o Nuodex Inc. P.O. Box 365
Piscataway New Jersey 08854 (US)
Erfinder : Burzin, Klaus, Dr.
Wellerfeldweg 164
D-4370 Marl (DE)

**Beschreibung**

Gegenstand der Erfindung sind kälteschlagzähe, thermoplastisch verarbeitbare Formmassen.

Poly(etheresteramide) sind bekannt. Es ist weiterhin bekannt, daß die Polyetheranteile als innere Weichmacher wirken und so die Schlagzähigkeit der Poly(etheresteramide) deutlich über das Niveau der reinen Polyamidkomponente angehoben wird (Angew. Makromol. Chem. 74 (1978) 49; DE-OSS 2 712 987, 2 930 343, 2 932 234, 2 936 976, 2 936 977). Allerdings nimmt der E-Modul der Formmassen mit zunehmendem Polyethergehalt stark ab, und die Schlagzähigkeit von z. B. mit Leitfähigkeitsruß gefüllten Formmassen erreicht nicht das für viele Anwendungsbereiche notwendige Niveau.

Die DE-OS 3 242 827 lehrt, daß Formmassen aus 1 bis 99 Teilen Poly(etheresteramid) und 99 bis 1 Teilen Polyolefin eine gegenüber der Poly(etheresteramid)-Komponente erhöhte Stoßfestigkeit besitzen. Allerdings handelt es sich bei den Polyolefinen um Polypropylen, Polyethylen, ihre Gemische oder Copolymere sowie um ionomere Harze. Solche Formmassen reichen in ihrem Eigenschaftsniveau nicht aus, da entweder im Falle der Copolyolefine die Anbindung der nicht funktionalisierten Olefinkomponente unvollständig ist, oder im Falle der ionomeren Harze die schlagzähmachende Wirkung nur gering ist.

EP-OS 84 277 beschreibt Textilfasern, die 1 bis 99 Teile Polyolefin und 99 bis 1 Teile Poly(etheresteramid) enthalten.

Die nicht-vorveröffentlichte EP-A-187 929 entspricht den erfindungsgemäßen Formmassen mit dem Unterschied, daß die Kautschukkomponente 0-15 Doppelbindungen pro 100 C-Atome aufweist.

Aufgabe der Erfindung war es, Formmassen auf der Basis von Poly(etheresteramiden) aufzufinden, die ein hohes Zähigkeitsniveau erreichen, ohne daß der E-Modul herabgesetzt wird. Auch durch einen Füllstoff, der die Versprödung der Formmassen bewirken könnte, sollte das Zähigkeitsniveau nicht abgesenkt werden.

Diese Aufgabe wurde gelöst durch Formmassen, bestehend aus

A. 95 bis 60 Gew.-Teilen mindestens eines Poly(etheresteramides) mit einer relativen Viskosität von mindestens 1,5 und

B. 5 bis 40 Gew.-Teilen eines Adduktes aus

I. 92,5 bis 99,5 Masse-% eines Poly($\alpha$-olefin)-Kautschuks mit einem Gehalt von bis zu 15 Doppelbindungen/1 000 C-Atome und einer Mooney-Viskosität ($ML_{1+4}$; 100 °C; DIN 53 523) von 30 bis 130 enthaltend

a. 50 bis 85 Gew.-Teile Ethen

b. 15 bis 50 Gew.-Teile Propen und/oder Buten-(1) und

c. ggf. ein oder mehrere Multiene mit isolierten Doppelbindungen, wobei die Komponenten a., b. und c. sich zu 100 Gew.-Teilen aufaddieren, sowie

II. 0,5 bis 7,5 Masse-% eines Gemisches von Maleinsäureanhydrid und Maleinsäure- und/oder Fumarsäure-di-($C_1$ bis $C_{10}$-alkyl)-ester im Masseverhältnis Anhydrid zu Diester von 1 : 5 bis 1 : 0,5.

Die Poly(etheresteramide) (Komponente A.) werden durch Kondensieren von

1. einer oder mehreren polyamidbildenden Verbindungen aus der Gruppe der $\omega$-Aminocarbonsäure bzw. Lactame mit 6 bis 20 C-Atomen, vorzugsweise mit 6 bis 12 C-Atomen,

2. einem Poly(alkylenglykol) mit einem Molekulargewicht im Bereich von 160 bis 3 000,

3. einer oder mehreren weiteren aliphatischen, cycloaliphatischen oder aromatischen Dicarbonsäuren erhalten.

Als polyamidbildende Verbindung (A.1) werden $\omega$-Aminocarbonsäure bzw. Lactame mit mindestens 6 C-Atomen, vorzugsweise Laurinlactam, $\omega$-Aminododecansäure oder $\omega$-Aminoundecansäure, verwendet. Eine weitere bevorzugte Möglichkeit besteht darin, anstelle der monomolekularen Aminocarbonsäuren, deren Polymere mit einem mittleren Molekulargewicht von 500 bis 20 000, vorzugsweise von 4 000 bis 10 000, einzusetzen.

Die angegebenen Werte für die mittleren Molekulargewichte ergeben sich durch Bestimmung der Viskositätszahl.

Poly(alkylenglykole) der Komponente A.2 sind Poly(ethylenglykol), Poly(propylenglykol) oder Poly(tetrahydrofuran)diol mit jeweils einem mittleren Molekulargewicht ($M_n$; bestimmt durch Endgruppentitration) im Bereich von 160 bis 3 000, vorzugsweise 300 bis 2 200, insbesondere von 500 bis 1 200. Bevorzugt ist die Verwendung von Poly(tetrahydrofuran)diol mit einem mittleren Molekulargewicht von 500 bis 2 000.

Die Komponente A.3 wird durch aliphatische, cycloaliphatische oder aromatische Dicarbonsäuren mit 4 bis 11 C-Atomen im Kohlenstoffgerüst gebildet. Beispielsweise seien Adipinsäure, Pimelinsäure, Korksäure, Azelainsäure, Sebazinsäure, Dodecandisäure, Hexahydroterephthalsäure oder die Phthalsäuren genannt. Bevorzugt für diese Komponente werden Terephthalsäure und Dodecandisäure eingesetzt.

Die Poly(etheresteramide) sind in der Weise aufgebaut, daß sich das Gewichtsverhältnis der Komponente A.1 und (A.2 + A.3) im Bereich von 95 : 5 bis zu 50 : 50 bewegt. Bevorzugt ist ein Gewichtsverhältnis im Bereich von 90-60 : 10-40. Die Hydroxyl- und Carboxylgruppen von (A.2 + A.3) liegen in etwa äquivalenten Anteilen, d. h. in einem Verhältnis von etwa 1 : 0,95 bis 1 : 1,05, vor.

EP 0 193 720 B1

Bevorzugte Poly(etheresteramide) werden durch Umsetzung von Laurinlactam, Poly(tetrahydrofuran) diol mit einem mittleren Molgewicht von 500 bis 2 000 und Dodecandisäure oder Terephthalsäure hergestellt. Das mittlere Molekulargewicht dieser Produkte liegt im Bereich von 5 000 bis 40 000, vorzugsweise 8 000 bis 25 000.

Die Herstellung derartiger Poly(etheresteramide) ist beispielsweise aus DE-OSS 2 712 987, 2 930 343, 2 932 234, 2 936 976 bzw. 2 936 977 bekannt.

Es können auch Gemische von Poly(etheresteramiden) eingesetzt werden, wobei die Mischungsverhältnisse für die Erfindung unkritisch sind.

Erfindungsgemäß geeignete Poly(etheresteramide) weisen eine relative Lösungsviskosität ($\eta_{rel}$) von mindestens 1,5, vorzugsweise von 1,8 bis 2,3, auf.

Die zur Herstellung der Komponente B. eingesetzten Poly($\alpha$-olefin)-Kautschuke können als amorpher Typ, Sequenz-Typ oder gemischter Typ vorliegen. Diese Produkte sind handelsüblich.

Die Kautschuke werden im allgemeinen als Pulver, Krümel oder Granulat eingesetzt und können < 5 Masse-%, bezogen auf den Kautschuk eines Trennpulvers, wie beispielsweise Polyethylen, Talkum oder Aerosil, enthalten.

Die Poly($\alpha$-olefin)-Kautschuktypen werden durch Polymerisation von

a. 50 bis 85 Gew.-Teilen, vorzugsweise von 60 bis 80 Gew.-Teilen, Ethen,

b. 15 bis 50 Gew.-Teilen, vorzugsweise von 20 bis 40 Gew.-Teilen Propen und/oder Buten-(1) erhalten. Daneben können bei der Polymerisation ggf. noch

c. ein oder mehrere Multiene mit isolierten Doppelbindungen eingesetzt werden. Der Anteil an diesen Multienen im Kautschuk beträgt 0,5 bis 10 Gew.-Teile, vorzugsweise 1 bis 5 Gew.-Teile (Die Komponenten a., b. und c. sollen sich zu 100 Gew.-Teilen aufaddieren). Entsprechend dem Anteil an Multien-Komponente weist der Kautschuk 0 bis 15 Doppelbindungen/1 000 C-Atome auf.

Die Mooney-Viskosität ($ML_{1+4}$; 100 °C; DIN 53 523) des Poly($\alpha$-olefin)-Kautschuks beträgt 30 bis 130, vorzugsweise 35 bis 110.

Zur Funktionalisierung wird an den Kautschuk ein Gemisch von Maleinsäureanhydrid und Maleinsäure- und/oder Fumarsäure-di-($C_1$ bis $C_{10}$-alkyl)-ester addiert. Bevorzugt verwendet werden Diester der Fumarsäure. Als Alkoholkomponente werden bevorzugt n-Butanol, n-Heptanol und n-Pentanol eingesetzt. Das Masseverhältnis von Maleinsäureanhydrid zu Diester beträgt 1:5 bis 1:0,5, vorzugsweise 1:2 bis 1:0,5.

In dem Addukt (Komponente B.) beläuft sich der Anteil an Poly($\alpha$-olefin)-Kautschuk auf 92,5 bis 99,5 Masse-%, vorzugsweise auf 96 bis 99 Masse-%.

Bei einer bevorzugten Verfahrensvariante zur Funktionalisierung des Kautschuks wird zunächst bei Raumtemperatur eine Mischung aus Kautschuk, Maleinsäureanhydrid und Diester hergestellt und anschließend diese Mischung in den Reaktor gegeben, in dem die Umsetzung stattfindet. In einer anderen bevorzugten Variante werden die Komponenten in verschiedene Zonen eines Extruders gegeben, wo dann die gewünschte Umsetzung stattfindet.

Zusätzliche Einzelheiten im Hinblick auf die Herstellung des Adduktes können DE-OS-3 335 706 entnommen werden.

Die Poly(etheresteramide) sind zu 95 bis 60 Gew.-Teilen, vorzugsweise zu 90 bis 70 Gew.-Teilen, in den erfindungsgemäßen Formmassen enthalten. Der Rest zu 100 Gew.-Teilen wird durch die Komponente B. gebildet.

Die Herstellung dieser Formmassen erfolgt in der Schmelze und in bekannter Weise ; beispielsweise in einem Doppelschneckenkneter, der vorteilhafterweise mit Knetblöcken ausgerüstet ist, oder in einem Entgasungsextruder.

In die erfindungsgemäßen Formmassen können weitere Polymere, wie z. B. Polyamide (DE-OS-2 716 004) und Poly(alkylenterephthalate) (DE-OS-2 930 343), eingearbeitet werden. Diese angeführten Mischungsbestandteile sind in den so erhaltenen Mischungen zu 1 bis 40, vorzugsweise 5 bis 25 Gew.-Teilen enthalten.

Übliche Zusatz- und Hilfsstoffe, wie Pigmente, Verarbeitungsmittel, weitere Füll- und Verstärkingsstoffe, Hydrolyse-, Thermo- oder UV-Stabilisatoren, können sowohl während der Herstellung als auch in die fertigen Formmassen eingearbeitet werden.

Die erfindungsgemäßen Formmassen eignen sich besonders bei Anwendung von Füllstoffen, die leicht zur Versprödung der gefüllten Formmassen führen. Derartige Füllstoffe können in Mengen von 1 bis 30 Masse-%, vorzugsweise von 5 bis 15 Masse-%, und insbesondere bevorzugt von 5 bis 10 Masse-%, eingearbeitet werden. Bevorzugt aus dieser Gruppe von Füllstoffen ist Leitfähigkeitsruß.

Gegenüber dem Stand der Technik weisen die erfindungsgemäßen Formmassen eine Reihe von unerwarteten Vorteilen auf : Die Zähigkeit in der Kälte wird stark verbessert, ohne daß der E-Modul wesentlich vermindert wird, und es können Füllstoffe, die eine Versprödung der Formmasse bewirken, eingearbeitet werden, ohne daß das Zähigkeitsniveau stark abfällt.

Die in der Beschreibung und den Beispielen angeführten Parameter wurden mittels der nachstehend genannten Meßmethoden bestimmt :

Die relative Viskosität ($\eta_{rel}$) der Poly(etheresteramide) und des Polyamids wurde in m-Kresol bei 25 °C (Konzentration : 0,5 g/dl) gemäß DIN 53 727 gemessen.

3

Die Mooney-Viskosität des Poly(α-olefin)-Kautschuks wurde gemäß DIN 53 523, Teil 1 bis 3 (unter den Bedingungen $ML_{1+4}$ ; 100 °C), bestimmt.

Die Kerbschlagzähigkeit ($a_K$) der Formmassen wurde nach DIN 53 453 an Normkleinstäben mit Rechteckkerbe gemessen.

Der E-Modul wird aus dem Zugversuch nach DIN 53 457 bestimmt.

Mit Buchstaben gekennzeichnete Versuche sind nicht erfindungsgemäß.

Beispiele

Herstellung des funktionalisierten Poly(α-olefin)-Kautschuks (Komponente B.)

95 Gew.-Teile eines Poly(α-olefin)-Kautschuks (75 Masse-% Ethylen, 23 Masse-% Propylen, 2 Masse-% Ethyliden-norbornen) mit einer Mooney-Viskosität von 85 werden in die Einzugszone eines Zweischneckenextruders eindosiert. In einer weiteren Einzugszone wird eine in einem Behälter hergestellte Mischung aus 2,5 Gew.-Teilen Maleinsäureanhydrid und 2,5 Gew.-Teilen Fumarsäure-di-n-butylester dem geschmolzenen Kautschuk zugegeben. Die Heizzonen des Extruders sin dabei, mit Ausnahme der ersten, gekühlten, auf 300 °C eingestellt. Es wird granuliert und auf eine Restfeuchte von weniger als 1 % getrocknet.

Herstellung der Formmassen

Das Granulat der Komponente B. mischt man mit der in Tabelle 1 aufgeführten Komponente A., gegebenenfalls zusätzlich mit handelsüblichem Leitfähigkeitsruß (KETJENBLACK® EC) (Tabelle 2) in den dort angegebenen Mengenverhältnissen und schmilzt das Gemenge in einem Doppelschneckenkneter, dessen Dispergierwirkung durch Knetblöcke verstärkt wurde, auf. Es wird granuliert und auf eine Restfeuchte von weniger als 0,5 % getrocknet. Bei den Versuchen A bis D werden die in den Tabellen angegebenen Komponenten, ohne Anwesenheit der Komponente B, in gleicher Weise umgeschmolzen und granuliert.

(Siehe Tabellen Seite 5 ff.)

4

Tabelle 1

| Beispiel | Komponente A. $[$Gew.-Teile$]$ | Zusammensetzung *) LL | DDS | $[$Masse-%$]$ PTHF | $\eta_{rel}$ | Komponente B. $[$Gew.-Teile$]$ | $a_K$ $[$kJ/m²$]$ 23 °C | $a_K$ $[$kJ/m²$]$ -20 °C | E-Modul $[$mPa$]$ |
|---|---|---|---|---|---|---|---|---|---|
| A | 100 | 100 | – | – | 1,7 | – | 8 | 6 | 1 500 |
| B | 100 | 85 | 2,8 | 12,2 | 1,9 | – | kB**) | 5 | 490 |
| C | 100 | 75 | 5,3 | 19,7 | 1,9 | – | kB**) | 10 | 360 |
| 1 | 100 | 85 | 2,8 | 12,2 | 1,9 | 10 | kB**) | 16 | 425 |
| 2 | 100 | 85 | 2,8 | 12,2 | 1,9 | 15 | kB**) | 22 | 420 |
| 3 | 100 | 90 | 1,9 | 8,1 | 1,9 | 15 | kB**) | 25 | 525 |

*) LL = Laurinlactam ; DDS = Dodecandicarbonsäure ; PTHF = $\alpha,\omega$-Dihydroxy(oxytetramethylen) ($\overline{M}_n$ = 1 000)

**) kB = kein Bruch

Tabelle 2

| Beispiel | Komponente A. | | | | | $\eta_{rel}$ | Komponente B. | Leitfähigkeitsruß | $a_K$ $/kJ/m^2/$ |
| | $/Gew.-Teile/$ | Zusammensetzung*) $/Masse-\%/$ | | | | | $/Gew.-Teile/$ | $/Gew.-Teile/$ | 23 °C |
| | | LL | DDS | PTHF | | | | | |
|---|---|---|---|---|---|---|---|---|---|
| D | 100 | 85 | 2,8 | 12,2 | 1,9 | | – | 10 | 12 |
| 4 | 100 | 85 | 2,8 | 12,2 | 1,9 | | 15 | 10 | 24 |

*) LL = Laurinlactam ; DDS = Dodecandicarbonsäure ; PTHF = $\alpha,\omega$-Dihydroxy(oxytetramethylen) ($\overline{M}_n$ = 1 000)

EP 0 193 720 B1

**Patentansprüche**

1. Kälteschlagzähe, thermoplastisch verarbeitbare Formmasse aus

A. 95 bis 60 Gew.-Teilen mindestens eines Poly(etheresteramides) mit einer relativen Viskosität von mindestens 1,5 und

B. 5 bis 40 Gew.-Teilen eines Adduktes aus

I. 92,5 bis 99,5 Masse-% eines Poly($\alpha$-olefin)-Kautschuks mit einem Gehalt von bis zu 15 Doppelbindungen/1 000 C-Atome und einer Mooney-Viskosität ($ML_{1+4}$ ; 100 °C ; DIN 53 523) von 30 bis 130 enthaltend

a. 50 bis 85 Gew.-Teile Ethen

b. 15 bis 50 Gew.-Teile Propen und/oder Buten-(1) und

c. ggf. ein oder mehrere Multiene mit isolierten Doppelbindungen, wobei die Komponenten a., b. und c. sich zu 100 Gew.-Teilen aufaddieren, sowie

II. 0,5 bis 7,5 Masse-% eines Gemisches von Maleinsäureanhydrid und Maleinsäure- und/oder Fumarsäure-di-($C_1$ bis $C_{10}$-alkyl)-ester im Masseverhältnis Anhydrid zu Diester von 1 : 5 bis 1 : 0,5.

2. Formmasse nach Anspruch 1, dadurch gekennzeichnet, daß sie bis zu 30 Gew.-Teile (bezogen auf 100 Gew.-Teile der Formmasse) Füllstoffe enthalten.

3. Formmasse nach Anspruch 2, dadurch gekennzeichnet, daß als Füllstoff Leitfähigkeitsruß verwendet wird.

**Claims**

1. A thermoplastic moulding composition with low-temperature impact strength which comprises

A. 95 to 60 parts by weight of at least one poly(ether ester amide) having a relative viscosity of at least 1.5 and

B. 5 to 40 parts by weight of an adduct made from

I. 92.5 to 99.5 % by weight of a poly($\alpha$-olefin) rubber containing up to 15 double bonds per 1 000 C atoms and having a Mooney viscosity ($ML_{1+4}$ ; 100 °C ; DIN 53 523) of from 30 to 130 and containing

a. 50 to 85 parts by weight of ethene

b. 15 to 50 parts by weight of propene and/or 1-butene and

c. optionally one or more multienes containing isolated double bonds, where components a., b. and c. add up to 100 parts by weight, and

II. 0.5 to 7.5 % by weight of a mixture of maleic anhydride and di-($C_1$ to $C_{10}$-alkyl) esters of maleic acid and/or fumaric acid in the anhydride : diester ratio by weight of from 1 : 5 to 1 : 0.5.

2. A moulding composition according to Claim 1, characterized in that it contains up to 30 parts by weight (based on 100 parts by weight of the moulding composition) of fillers.

3. A moulding composition according to Claim 2, characterized in that, as filler, conductivity-grade carbon black is used.

**Revendications**

1. Masse à mouler résistant au choc à froid, pouvant être thermoplastiquement façonnée, obtenue à partir

A. de 95 à 60 parties en poids d'au moins un poly(éther-ester-amide) d'une viscosité relative de 1,5 au moins et

B. de 5 à 40 parties en poids d'un produit d'addition obtenu à partir :

I. de 92,5 à 99,5 % en masse d'un caoutchouc à base d'une poly-alpha-oléfine pouvant renfermer jusqu'à 15 doubles liaisons pour 1 000 atomes de carbone et présentant une viscosité Mooney ($ML_{1+4}$ ; 100 °C ; DIN 53 523) de 30 à 130, renfermant :

a. de 50 à 85 % en poids d'éthène

b. de 15 à 50 % en poids de propène et/ou de butène-(1) et

c. éventuellement un ou plusieurs multi-ènes comportant des doubles liaisons isolées, les composants a., b. et c. s'additionnant, ainsi que

II. de 0,5 à 7,5 % en masse d'un mélange d'anhydride d'acide maléique et d'un maléate et/ou fumarate d'un di-alkyle en $C_1$ à $C_{10}$, le rapport de masse de l'anhydride au diester étant de 1 : 5 à 1 : 0,5.

2. Masse à mouler selon la revendication 1, caractérisée par le fait qu'elle renferme jusqu'à 10 % en poids de charges (relativement à 100 parties en poids de la masse à mouler).

3. Masses à mouler selon la revendication 2, caractérisée par le fait qu'on utilise comme charge de la suie conductrice.